# EUROPEAN PATENT APPLICATION

(11) **EP 2 728 692 A1**
(43) Date of publication of application: **07.05.2014**
(21) Application number: 12191070.7
(22) Date of filing: 02.11.2012
(51) Int. Cl.: H02H 3/24, H02H 7/18

(54) **Apparatus and method for an under-voltage protection of an electrical network, especially in an aircraft comprising a fuel cell**

(71) Applicant: Airbus Operations GmbH, 21129 Hamburg (DE)
(72) Inventor: Lücken, Arno, 20259 Hamburg (DE); Schulz, Detlef, 22043 Hamburg (DE)
(74) Representative: Maiwald Patentanwalts GmbH

(57) **Abstract**

Apparatus (4) for protecting an electrical network (6) of an aircraft, comprising a power switch (22), an activation means (20) coupled with the power switch (22), a detection circuit (10, 12) connectable to the electrical network (6) for detecting a voltage, wherein the detection circuit (10, 12) is coupled with the activation means (20) and wherein the activation means (20) is adapted for opening the power switch (22) once the detected voltage is lower than a predetermined voltage. This is particularly advantageous for high voltage direct current networks temporarily, primarily or permanently powered by a fuel cell system.

## Description

### TECHNICAL FIELD

The invention relates to an apparatus for an under-voltage protection of an electrical network, a method for an under-voltage protection in an aircraft and an aircraft with at least one electrical network and at least one apparatus for an under-voltage protection of the at least one electrical network.

### BACKGROUND OF THE INVENTION

In modem commercial aircraft, the required amount of electrical energy tends to increase constantly due to an ongoing attempt to implement a more electric aircraft concept. This concept aims to replace existing forms of energy, such as hydraulic or pneumatic energy, by electrical energy, which is distributed via one or more electrical networks.

A common means for protecting an electrical network in today's commercial aircraft is substantially based on a overcurrent-time protection by means of fuses, power switches etc. Such a primary protection for an electrical network is characterized by the fact that it does not require an external source of power. A common overcurrent-time protection requires a multitude of a design current of the electrical network to provide a safe activation of an overcurrent protection mechanism.

Considering the possible introduction of fuel cell systems into modem commercial aircraft, e.g. for a supply of an electrical network in the aircraft at least in ground phases, new conditions for a primary protection arise. This is based on the fact that a certain short-circuit energy for a safe activation of the above-described overcurrent-time protection is required.

Due to the physical characteristics of fuel cells in comparison to engine-driven generators, fuel cells may not be able to deliver a sufficient current that leads to a safe activation of a overcurrent-time protection means. In contrast, common electrical generators may easily be able to provide 6 - 8 times of the design current in a failure case.

### SUMMARY OF THE INVENTION

Based on the above-described characteristics of a fuel cell system, it may be an object of the invention to provide a protection means for an electrical network that is not based on a overcurrent-time protection but is able to provide a safe protection in a low-current environment.

The object may be met by an apparatus for protecting an electrical network according to the features of claim 1. Advantageous embodiments and improvements may be gathered from the sub-claims and the following description.

An apparatus for protecting an electrical network comprises a power switch, an activation means coupled with the power switch and a detection circuit connectable to the electrical network for detecting a voltage. The detection circuit is coupled with the activation means and the activation means is adapted for opening the power switch once the voltage detected by the detection circuit is lower than a predetermined voltage.

The above-defined apparatus according to the invention is not based on a common overcurrent-time protection but is capable for sensing a breakdown of a supply voltage provided in the electrical network, e.g. in case of a short-circuit. A core aspect of the apparatus according to the invention lies in the use of a combination of a voltage detection circuit, the activation means and the power switch. As long as the voltage supplied by the electrical network equals or exceeds a given value, the power switch is maintained in a closed state, such that electrical loads are constantly supplied with electrical power through the electrical network. Once the voltage is lower than the predetermined value the power switch is opened and the electrical loads connected to the electrical network are not supplied with electrical power anymore. Thereby, also the device or wiring that caused the electric failure is reliably disconnected from the electrical network.

The power switch may be an electromechanical switch for connecting at least one pole of a voltage source and an electrical line of the electrical network. The activation means may comprise a coil having a plurality of windings that allow the creation of an electromagnetic field, e.g. for moving a ferromagnetic core mechanically coupled with the power switch. The activation means may thereby be directly combined with the power switch in form of a relay or a similar device. The activation means may directly be supplied with an operating voltage by the detection circuit.

Besides that, the power switch may also be realized as a completely electronic, semiconductor based device, e.g. a thyristor, while the activation means may be realized by any means capable of delivering a control voltage to the semiconductor based device, for example to a base layer of a thyristor. Such a semiconductor-based power switching means may comprise a control input directly connected to a respective control voltage output of the detection circuit.

The main advantage of the apparatus according to the invention lies in the fact that for a safe protection of the electrical network in failure cases, an overcurrent is not necessary.

In an advantageous embodiment the detection circuit and the activation means are serially connected. The detection circuit is adapted for letting a current flow through the activation means when the detected voltage equals or exceeds the predetermined voltage. This simplifies the arrangement of detection circuit and activation means to a great extent and improves the ease of installation in virtually any place of the electric network.

In a still further embodiment, the detection circuit comprises a Zener diode with an imminent breakdown voltage and a diode in a serial connection, wherein the forward directions of the Zener diode and the diode are opposite to each other. Such a combination of a Zener diode and a diode leads to a current flow when the breakdown voltage value of the Zener diode is reached. Hence, by a dedicated design of the Zener diode the imminent breakdown voltage of the Zener diode is responsible for the success of the detection circuit in detecting abnormal voltage values of the voltage supply in the electrical network. If the supplied voltage is in a normal range the breakdown voltage of the Zener diode is always overcome, such that the activating means is always supplied with a current and thereby closes the power switch safely or holds it in a closed position. In any event that leads to a clear breakdown of the supply voltage in the electrical network, e.g. due to a short-circuit, the breakdown voltage value of the Zener diode may not be reached any more such that the current flow through the combination of diode and Zener diode stops. The activation means is thereby not powered and does not close the power switch. Consequently, the power switch opens. Hence, the electrical network may be separated from the voltage source, e.g. a fuel cell system.

An advantageous embodiment comprises an auxiliary switch which is adapted to interrupt the connection between the detection circuit and at least one pole of the electrical network, wherein the auxiliary switch is coupled with the activation means. By this measure, not only the power switch is opened on the occurrence of a voltage breakdown in the electrical network but also the auxiliary switch. In case the power switch is opened, the voltage of the voltage supply that is detected by the detection circuit may suddenly revert into a normal range such that it would lead to a sudden operation of the activation means and moving the power switch from an open state into a closed state again. If the electrical failure, e.g. a short-circuit, is still present within or connected the electrical network this would lead to a sudden breakdown of the voltage and hence to a sudden opening of the power switch again. This may ultimately result in an unwanted pulsation effect. For the purpose of preventing this, the auxiliary switch is opened, too, which completely deactivates the detection circuit and hence would not lead to a further closing of the power switch again unless the auxiliary switch is closed manually. As the auxiliary switch may be located in a remote location this may further simplify the maintenance function of the apparatus according to the invention.

In an exemplary embodiment, the auxiliary switch may be situated between one of the Zener diode, the diode and the activation means and an input connectable to a pole of the electrical network or any other connected component. It is not possible any more to provide a current flow through the Zener diode and the diode without manually closing the auxiliary switch again. This leads to a one-time operation of the apparatus according to the invention and safely eliminates any pulsation effect.

In a still further embodiment, the auxiliary switch is connected to an auxiliary switch activation means that is adapted for closing the auxiliary switch. This auxiliary switch activation means may be realized by a mechanical lever connected to the auxiliary switch such that by pressing one end of the lever, the other end of the lever mechanically moves the auxiliary switch into a closed position. The auxiliary switch activation means may also comprise any other mechanical means couplable to the auxiliary switch and allowing a user to interact with it. A mechanical auxiliary switch activation means may be made of an isolating material, e.g. a plastic material, in order to prevent the generation of an electric shock.

In an advantageous embodiment the auxiliary switch activation means is a third switch being connected in parallel to the auxiliar switch. By closing this third switch the current flow through the activation means may be restored for reverting the power switch and the auxiliary switch to a closed state again.

The activation means may further comprise a source of energy for driving a dedicated electromagnetic means that is adapted for closing the auxiliary switch again. Of course, any other means known to a person skilled in the art, e.g. on a hydraulic, pneumatic, pulling or pushing means may still be used for closing the auxiliary switch.

Another advantageous embodiment comprises a buffer for electrical energy connected to the activation means. This buffer may comprise a capacity or a serial connection of a capacity and a resistor in order for preventing a switching of the power switch when a very short and foreseeable temporary breakdown of the voltage supply occurs. This may be the fact when large inductivities in connection to electric motors or the such are connected to the electrical network. Commonly, temporarily decreasing voltages may be measured within the electrical network during the changing operation of electrical loads. By buffering a predetermined amount of energy in the capacity, the activating means may temporarily hold the power switch in a closed position even if the detection circuit detects a voltage value below the predetermined breakdown voltage value. By dimensioning the capacity, a predetermined time interval t may be defined within which time interval the power switch is maintained in a closed position and, subsequently after completely using the stored electrical energy from the buffer, after which the activation means is deactivated and the power switch is opened.

The invention also relates to a method for protecting an electrical network comprising the steps of detecting a voltage in the electrical network, holding a power switch in a closed position until the detected voltage is lower than a predetermined voltage, wherein detecting the voltage of the voltage supply comprises letting a current flow through the detection circuit comprising a combination of a Zener diode and a diode in a serial connection with opposite forward directions and powering an activation means connected to the power switch by the current flowing through the combination of diode and Zener diode.

As described above, the method according to the invention may further comprise decoupling the detection circuit from at least one pole of the electrical network if the detected voltage is lower than a predetermined voltage by means of an auxiliary switch.

Furthermore, the invention also relates to an aircraft having at least one electrical network and at least one fuel cell system connected to the at least one electrical network, wherein the electrical network comprises an apparatus for protecting the electrical network according to the above-described features.

In an approach for increasing the efficiency of an aircraft by implementing a more electric aircraft (MEA) concept multi functional fuel cell systems (MFFCS) may be utilized, that may lead to a clear noise reduction, the reduction of ground support, the ability for tank inerting with cathode exhaust gas, the reduction of emissions, the water generation as well as the possible replacement of a common Ram Air Turbine (RAT). Other than traditional APU generators the MFFCS delivers a direct current. The value of the output voltage depends on the connected loads. Due to the increasing number of electrical consumers the voltage level on modem aircraft may also be increased up to High Voltage DC (HVDC) 540 V DC (±270 V DC). The main benefit of the new higher voltage is that the cable weight decreases as a result of the reduced current flow while transmitting the same electrical power. DC/DC converters may be used to transform the variable fuel cell output voltage into a HVDC level. The apparatus for protecting the electrical network according to the above-described features is especially suitable for such a HVDC network in an aircraft, especially under utilization of a fuel cell system. Due to the electrical characteristics of a fuel cell system, it is advantageous to detect the voltage supplied by the fuel cell system as such a fuel cell system is usually not able to provide a multitude of a design current for safely operating common overcurrent based protection means.

### BRIEF DESCRIPTION OF THE DRAWINGS

Further features, advantages and possible applications of the present invention may be taken from the following description of the embodiments and from the drawings. In this context, all of the disclosed and/or illustrated features in themselves, in combination and irrespective of the composition thereof in the individual claims or the dependencies thereof form the subject matter of the invention. Further, in the drawings like reference numerals denote like or similar objects.
Fig. 1 shows a characteristic polarization curve of a fuel cell.
Fig. 2a and 2b show an exemplary embodiment of the apparatus according to the invention.
Fig. 3 is a schematic view of an electrical network with two voltage supplies in the form of fuel cells.
Fig. 4 is a top view of an aircraft with an electrical network comprising a protection apparatus:

### DETAILED DESCRIPTION OF EXEMPLARY EMBODIMENTS

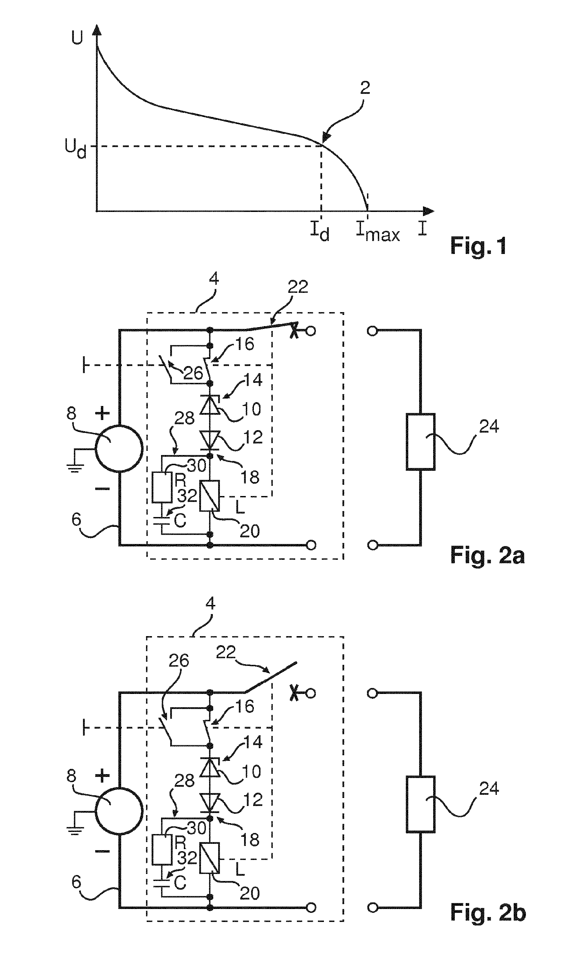

Fig. 1 shows a characteristic polarization curve of a fuel cell. It is clearly apparent that the supplied voltage (U) depends on the current flow (I) and vice versa. An operating point 2 may define a point on the polarization curve in which the voltage equals a "design voltage" U_{d} and the flowing current equals a design current "I_{d}". A fuel cell system may be designed to be able to provide such a design voltage and a design current for an extended period of time, under consideration of a sufficient supply of operating fluids and a sufficient cooling.

In case the voltage breaks down, for example due to a short-circuit in an electrical circuit attached to a fuel cell system, a resulting maximum possible current Iₘₐₓ is somewhat higher than the design current I_{d}, but the difference between this maximum current Iₘₐₓ and the design current I_{d} may be far less than the absolute value of the design current I_{d}. Therefore, commonly utilized overcurrent-time protection devices may not be used in electrical networks that are primarily or temporarily supplied by a fuel cell system.

In Figs. 2a and 2b, an apparatus 4 for protecting an electrical network 6 is shown. The electrical network 6 is thereby supplied by a fuel cell 8 with electrical power. The apparatus 4 comprises a serial connection of a Zener diode 10 and a diode 12 as a detection circuit, wherein the forward directions of the Zener diode 10 and the diode 12 are opposite to each other. The Zener diode 10 is connected with a forward end 14 to an auxiliary switch 16 which in turn is connected to a plus-pole of the electrical network 6. The diode 12 is connected with a forward end 18 to an activation means 20 which in turn is connected to a minus-pole of the electrical network 6.

The activating means 20 may comprise a coil with a plurality of windings and may be mechanically coupled with the auxiliary switch 16 as well as with a main switch 22. This power switch 22 is exemplarily connected to the plus-pole of the electrical network 6 and is adapted for providing or interrupting an electrical connection between the electrical network 6 and one or more electrical loads 24. The activation means 20 is adapted for holding the auxiliary switch 16 and the power switch 22 in a closed position (Fig. 2a) when the activation means 20 is flown through by a current. This may be conducted by applying an electromagnetic force onto a ferromagnetic core that is mechanically coupled to both switches 16 and 22, just like in a relay or a similar device.

The operating characteristics of the Zener diode 10 permits a current flow in a forward direction substantially at any usable voltage but only permits a current flow in a reverse direction when a breakdown voltage value imminent to the Zener diode 10 is exceeded. This means that a current from the plus-pole to the minus-pole of the electrical network 6 may only occur through the Zener diode 10 when the voltage between the plus-pole and the minus-pole exceeds a predetermined breakdown voltage imminent to the Zener diode 10. Providing the diode 12 with an forward direction matching the reverse direction of the Zener diode 10 prohibits a current flow in the forward direction of the Zener diode 10. Therefore, the activation means 20 may only be powered when the imminent breakdown voltage value of the Zener diode 10 is exceeded. Ultimately this leads to maintaining the closed state of the switches 16 and 22 as long as the voltage of the electrical network 6 exceeds the predetermined breakdown voltage.

In case a clear voltage drop in the fuel cell 8 and, as a result, in the electrical network 6 occurs, the Zener diode 10 prohibits a current flow in a reverse direction such that the activation means 20 is not powered any more. This leads to a transition of both switches 16 and 22 from a closed into an opened state such that the electrical load 24 is not supplied with power (Fig. 2b). As the auxiliary switch 16 exemplarily opens the connection of the forward end 14 of the Zener diode 10 to the plus-pole, even after restoring the voltage in the electrical network 6, the switches 16 and 22 are maintained in an opened state. The detection circuit will not be able to detect any voltage change until the auxiliary switch 16 is closed through a manual interaction. This clearly provides a safety function as a short-circuit failure may reliably be separated from the electrical network 6 and will not be reconnected to the fuel cell system 8 without a manual interaction.

For restoring a connection of the electrical loads 24 to the electrical network 6, a third switch 26 may be arranged in a parallel connection to the auxiliary switch 16. By closing this third switch 26, e.g. by a manual interaction of a user, the current flow through the activation means 20 may be restored such that the power switch 22 and the auxiliary switch 16 may revert to a closed state again. The third switch 26 may be a push button or the such.

As an alternative to the third switch 26, the auxiliary switch 16 may be couplable with a mechanical auxiliary switch activation device that allows a user for a manual closing of the auxiliary switch 16.

In order to prevent an unintended activation of the apparatus 4, a buffer 28 may be connected to the activating means 20 in a parallel connection. This buffer 28 may be adapted to store a predetermined amount of electrical energy to maintain a power supply of the activating means 20 for a predetermined time period t. The buffer 28 may thereby realized as a serial connection of a resistor 30 and a capacity 32. If the Zener diode 10 stops to let a current flow through it in a reverse direction the activation device 20 consumes the electrical energy stored in the buffer 28 until it is empty. Afterwards, the activation means 20 loses power and is not able to maintain the open states of both switches 16 and 22.

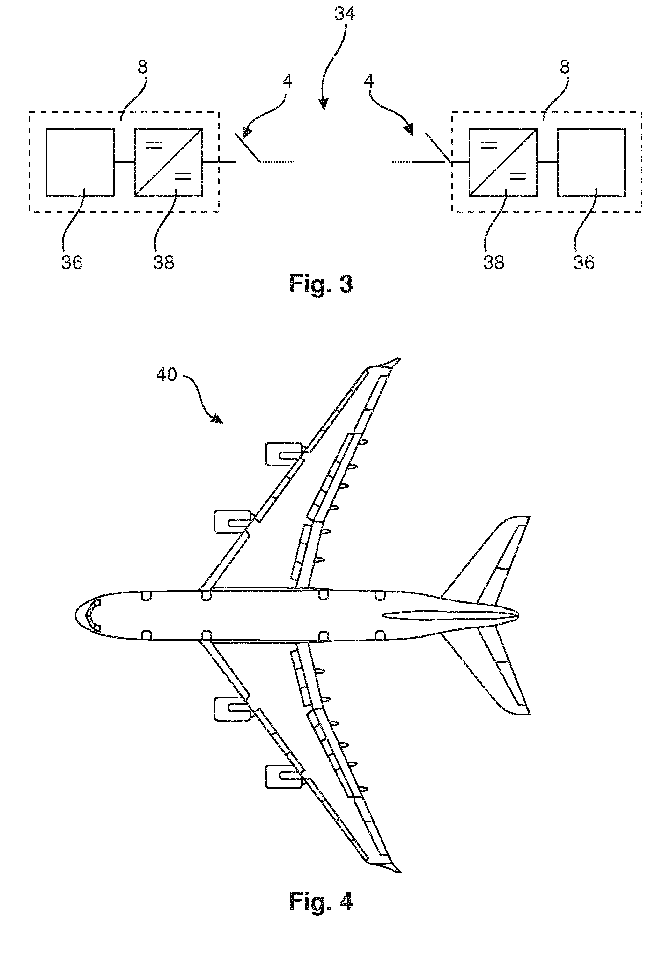

Fig. 3 shows an exemplary electrical network 34 provided with electrical power by exemplarily two fuel cell systems 8, each comprising a fuel cell 36 and a DC/DC converter 38. The electrical network 34 may thereby be a high-voltage DC network adapted for providing a direct current to a plurality of electrical loads 24. Each power supply may be protected by an apparatus 4 according to the invention such that this exemplary embodiment of an electrical network 34 comprises two of such an apparatus 4.

Such an electrical network 34 may be installed in an aircraft 40 in order to power a plurality of electrical loads at least in a ground phase. Providing more than just one fuel cell system 8 provides for a certain level of redundancy and reliability. Further, the use of a high-voltage direct current electrical network may have the advantage to be able to eliminate rectifiers and filters and simplifies the distribution of electrical energy to a variety of types of electrical loads.

For the sake of completeness, it should be noted that "comprising" does not exclude the possibility of other elements or steps, and "a" or "an" does not exclude the possibility of a plurality. It should further be noted that features which have been disclosed with reference to one of the above embodiments may also be used in combination with other features of other embodiments which are disclosed above. Reference numerals in the claims should not be taken as limiting.

## Claims

1. Apparatus (4) for protecting an electrical network (6), comprising:
- a power switch (22),
- an activation means (20) coupled with the power switch (22),
- a detection circuit (10, 12) connectable to the electrical network (6) for detecting a voltage,
wherein the detection circuit (10, 12) is coupled with the activation means (20) and
wherein the activation means (20) is adapted for opening the power switch (22) once the voltage detected by the detection circuit (10, 12) is lower than a predetermined voltage.

2. Apparatus of claim 1,
wherein the detection circuit (10, 12) and the activation means (20) are serially connected, and
wherein the detection circuit (10, 12) is adapted for letting a current flow through the activation means (20) when the detected voltage equals or exceeds the predetermined voltage.

3. Apparatus of claim 1 or 2,
wherein the detection circuit comprises a Zener diode (10) with an imminent breakdown voltage and a diode (12) in a serial connection, wherein the forward directions of the Zener diode (12) and the diode (10) are opposite to each other.

4. Apparatus of one of the preceding claims,
further comprising an auxiliary switch (16) which is adapted to interrupt the connection between the detection circuit (10, 12) and at least one pole of the electrical network (6),
wherein the auxiliary switch (16) is coupled with the activation means (20).

5. Apparatus of claim 3 and 4,
wherein the auxiliary switch (16) is situated between one of
- the Zener diode (12),
- the diode (10) and
- the activation means (20)
and an input connectable to a pole of the electrical network (6) or another connected component.

6. Apparatus of one of the claims 3 to 5,
wherein the auxiliary switch (16) is connected to an auxiliary switch activation means (26) that is adapted for closing the auxiliary switch (16).

7. Apparatus of claim 6,
wherein the auxiliary switch activation means (26) is a third switch being connected in parallel to the auxiliary switch (16).

8. Apparatus of any of the preceding claims,
further comprising a buffer (28) for electrical energy connected to the activation means (20).

9. Method for protecting an electrical network in an aircraft, comprising the steps of:
- detecting a voltage in the electrical network (6) by means of a detection circuit (10, 12),
- holding a power switch (22) in a closed position, and
- opening the power switch (22) if the detected voltage is lower than a predetermined voltage.

10. Method according to claim 9,
wherein detecting the voltage comprises letting a current flow through the detection circuit (10, 12) comprising a combination of a Zener diode (10) and a diode (12) in a serial connection with opposite forward directions and powering an activation means connected to the power switch (22) by the current flowing through the combination of the diode (10) and the Zener diode (12).

11. Method according to claim 9 or 10, further comprising the steps of decoupling the detection circuit (10, 12) from at least one pole of the electrical network (6) if the detected voltage is lower than a predetermined voltage by means of an auxiliary switch (16).

12. Aircraft (40) having at least one electrical network (6) and at least one fuel cell system (8) connected to the at least one electrical network (6), wherein the electrical network (6) comprises an apparatus (4) for protecting the electrical network (6) according to one of the claims 1 to 8.
